# EUROPEAN PATENT SPECIFICATION

(11) **EP 3 903 594 B1**
(45) Date of publication and mention of the grant of the patent: **10.09.2025**
(21) Application number: 19904868.7
(22) Date of filing: 27.12.2019
(51) Int. Cl.: A23D 9/04, A23G 1/36, A21D 13/22, A21D 13/45, A23D 9/02, A23G 1/30, A23G 1/54, A23G 1/00, C11B 7/00

(54) **FAT COMPOSITION USED FOR CHOCOLATE**
FETTZUSAMMENSETZUNG FÜR SCHOKOLADE
COMPOSITION DE GRAISSE UTILISÉE POUR UN CHOCOLAT

(30) Priority: 28.12.2018 CN 201811618522
(43) Date of publication of application: 03.11.2021
(73) Proprietor: Wilmar (shanghai) Biotechnology Research & Development Center Co., Ltd., Shanghai 200137 (CN)
(72) Inventor: DENG, Lulu, Shanghai 200137 (CN); XU, Zhenbo, Shanghai 200137 (CN); ZHANG, Hong, Shanghai 200137 (CN); LIANG, Jun, Shanghai 200137 (CN); ZHANG, Chao, Shanghai 201200 (CN); SHI, Mingwei, Shanghai 201403 (CN)
(74) Representative: Santoro, Sofia
(86) International application number: PCT/CN2019/128978
(87) International publication number: WO 2020/135661

(56) References cited:
- EP-A1- 0 532 086
- EP-A2- 0 704 163
- WO-A1-2006/029139
- CN-A- 104 171 029
- CN-A- 108 112 760
- CN-A- 108 606 086
- DE-U1- 202018 105 434
- US-A1- 2017 049 124

## Description

### Technical field

The present disclosure relates to the field of oil, particularly relates to an oil and fat composition for chocolate.

### Background

In recent years, with the continuous influx of foreign imports, consumers have pursued more differentiated chocolates and chocolate products. In particular, the combination of chocolate and baking has become more and more extensive. Conventional chocolate products such as chocolate coated wafers and chocolate sandwich biscuits have been unable to meet consumers' requirements for differentiated and innovative chocolate foods. Therefore, it has become an important development direction to develop more chocolate products that have rich taste, good flavor, and are easy to produce and transport.

Baked chocolate and chocolate products were first invented in Japan. Patent Document 1 JP2009-059914A improves the baking resistance of chocolate by aerating the chocolate slurry and gives the chocolate a soft and light taste. Patent JP6225296 spreads an aqueous sugar solution added with an emulsifier on the surface of the chocolate to make the chocolate in the baking process form a hard shell, thus forming different levels of taste, and providing a performance that the surface does not stick to the bag. Fat compositions are also known from DE202018105434 U1, WO 2006/029139 A1 and US 2017/049124 A1.

However, the above method makes the chocolate preparation process too complicated, which requires additional equipment and procedures, increases the cost of raw materials, and reduces production efficiency at the same time.

### Summary

In order to overcome the above shortcomings, the present disclosure provides a chocolate oil and fat composition, the baked chocolate prepared by which has good heat resistance, is crispy outside and soft inside, and has no waxy feel. The present invention is defined in the appended claims.

In the first aspect, the present invention provides an oil and fat composition as claimed in claims 1-5. The present disclosure also provides such an oil and fat composition comprising, based on the total weight of the oil and fat composition, 10-40% of triglycerides having 30-40 carbon atoms, 50-80% of triglyceride having 42-52 carbon atoms, and 30-60% or 35-55% or 38-53% of X2U, where X represents a saturated fatty acid having a carbon number of 12 or more, U represents an unsaturated fatty acid having a carbon number of 16-18, and X2U represents a triglyceride of di-saturated monounsaturated fatty acid.

In one or more preferred embodiments, the amount of XU2 is 10-30%, wherein XU2 represents a triglyceride of a monosaturated di-unsaturated fatty acid.

In one or more preferred embodiments, the mass ratio of PPO/POP is 0.05-0.25, where PPO represents a triglyceride with palmitic acid at 1,2-position and oleic acid at 3-position, and POP represents a triglyceride with palmitic acid at 1,3-position, and oleic acid at 2-position.

In one or more preferred embodiments, the oil and fat composition comprises 50-80% of solid fat at 10°C.

In one or more preferred embodiments, the oil and fat composition comprises 60-80% of solid fat at 10°C.

In one or more preferred embodiments, the oil and fat composition comprises 65-80% of solid fat at 10°C.

In one or more preferred embodiments, the oil and fat composition comprises 20-30% of solid fat at 20°C.

In one or more preferred embodiments, the oil and fat composition comprises less than 25% of solid fat at 25°C.

In one or more preferred embodiments, the oil and fat composition comprises less than 20% of solid fat at 25°C.

In one or more preferred embodiments, the oil and fat composition comprises less than 15% of solid fat at 25°C.

In one or more preferred embodiments, the oil and fat composition comprises less than 10% of solid fat at 25°C.

In one or more preferred embodiments, the oil and fat composition comprises 5-10% of solid fat at 25°C.

In one or more preferred embodiments, the oil and fat composition comprises 0-10% of solid fat at 30°C.

In the invention, the oil and fat composition comprises non-lauric acid type oil and fat and lauric acid type oil and fat, and the weight ratio of the non-lauric acid type oil and fat to the lauric acid type oil and fat is 1:1-4:1.

In the invention, the lauric acid type oil and fat is fractionated palm kernel stearin and coconut oil having a melting point of 20-35°C; the non-lauric acid type oil and fat is palm oil fraction.

In the second aspect, the present disclosure provides a method for preparing an oil and fat composition, which comprises the steps:
(1) providing non-lauric acid oil and fat and lauric acid oil and fat;
(2) mixing the non-lauric acid oil and fat and the lauric acid type oil and fat from step (1) in a mass ratio of 1:2-8:1, preferably 1:1-4:1.

In one or more preferred embodiments, the lauric acid type oil and fat is fractionated palm kernel oil stearin and/or coconut oil having a melting point of 20-35°C; the non-lauric acid type oil and fat is palm oil fraction.

In a third aspect, the present invention provides a chocolate slurry as claimed in claims 6-8. The present disclosure also provides such a slurry comprising the oil and fat composition according to any embodiment of the present disclosure or the oil and fat composition prepared by the method according to any embodiment of the present disclosure, wherein the content of the oil and fat composition is 20-35% based on the total weight of the chocolate slurry.

In a fourth aspect, the present invention provides baked chocolate as claimed in claims 9 and 10. The present disclosure also provides such baked chocolate and products thereof. In the baked chocolate and products thereof, the content of the oil and fat composition according to any embodiment of the present disclosure is 20% to 40% by weight.

In one or more preferred embodiments, the baked chocolate also comprises sugar, lecithin, and milk powder.

In one or more preferred embodiments, the baked chocolate comprises 20-40% by weight of sugar, 0.1-0.5% by weight of lecithin, and 0-20% by weight of milk powder.

In one or more preferred embodiments, the sugar is one or more of sucrose, maltose, white granular sugar, caramel, fructose, and trehalose.

In one or more preferred embodiments, the milk powder is skimmed milk powder and/or whole milk powder.

In one or more preferred embodiments, the baked chocolate further comprises yogurt powder and/or whey powder.

In one or more preferred solutions, the baked chocolate also contains Mi Xi powder.

In one or more preferred embodiments, the baked chocolate is milk flavored baked chocolate, yogurt flavored baked chocolate, cheese flavored chocolate, strawberry flavored chocolate, mango flavored chocolate, bakedrice wheat germ crispy chocolate, and other flavored baked chocolates.

In one or more preferred embodiments, the baked chocolate is a chocolate product added with one or more of baked nuts, cooked nuts, baked products, dried fruits, and matured cereal products and raw materials.

In one or more preferred embodiments, the baked nuts or cooked nuts are selected from one or more of chopped hazelnut, chopped peanut, almond flakes, chopped badam and melon seeds.

In one or more preferred embodiments, the baked product is selected from one or more of Oreo crumbles, biscuit crumbles, caramel crisps and egg roll crumbles.

In one or more preferred embodiments, the dried fruit is selected from one or more of dried strawberries, dried cranberries, dried blueberries and dried mangoes.

In one or more preferred embodiments, the matured cereal products and raw materials are selected from one or more of rice flakes, oatmeal, sesame, starch and maltodextrin.

In a fifth aspect, the present invention provides a method for preparing baked chocolate, as claimed in claim 11. The present disclosure also provides such a method which comprises the steps of:
(1) preparing raw materials including the oil and fat composition of the present disclosure;
(2) mixing the raw materials uniformly, putting them into a ball mill, and grinding to a fineness of 20-30µm to obtain a chocolate slurry;
(3) insulating the chocolate slurry, then casting it into a mold, demoulding it to make a chocolate bar;
(4) placing the chocolate bar in a baking equipment at 200-400°C, preferably 200-300°C, more preferably 220-260°C, and baking for 80-300 seconds, such as 80-150 seconds, to prepare the baked chocolate.

In one or more preferred embodiments, the baking equipment is in a form selected from one or more of layer furnaces, open hearth furnaces, wind furnaces and tunnel ovens.

In one or more preferred embodiments, the baking heating is performed in a form of one or more of direct combustion, heat conduction, hot air convection and infrared heating.

In one or more preferred embodiments, after the chocolate and its products are baked, they are cooled and crystallized at 10-25°C, packaged after cooling, stabilized and matured at 20-30°C for 2-5 days.

In a sixth aspect, the present invention provides a baked chocolate crispy coated baked food as claimed in claim 12. The present disclosure also provides such a food which contains the oil and fat composition according to any embodiment of the present disclosure, and the content of the oil and fat composition is 5wt%-25wt% based on the total mass of the baked food.

In one or more preferred embodiments, the baked chocolate crispy coated baked food is baked rice milk crispy chocolate wafers, or baked chocolate crispy cakes, or baked chocolate crispy biscuits.

In a seventh aspect, the present invention provides a method for preparing a baked chocolate crispy coated baked food as claimed in claim 13. The present disclosure also provides such a method, which comprises the steps of:
(1) preparing raw materials including the oil and fat composition of the present disclosure;
(2) mixing the raw materials uniformly, putting them into a ball mill, and grinding to a fineness of 20-30µm to obtain a chocolate slurry;
(3) insulating the chocolate slurry and coating a wafer;
(4) placing the wafer coating in a baking equipment at 200-400°C, preferably 200-300°C, more preferably 220-260°C and baking for 80-300 seconds, such as 80-150 seconds, to obtain a baked chocolate crispy coated baked food.

In one or more preferred embodiments, the baking equipment is in a form selected from one or more of layer furnaces, open hearth furnaces, wind furnaces and tunnel ovens.

In one or more preferred embodiments, the baking heating is performed in a form selected from one or more of direct combustion, heat conduction, hot air convection, and infrared heating.

In one or more preferred embodiments, after baking, the baked chocolate crispy coated baked food is cooled and crystallized at 10-25°C, packaged after cooling, stabilized and matured at 20-30°C for 2-5 days.

In one or more preferred embodiments, the method further comprises the step of sprinkling one or more of wheat germ, oatmeal, rice flakes and sesame on the surface of the wafer coating.

In an eighth aspect, the present invention provides a filled baked chocolate as claimed in claim 14. The present disclosure also provides such baked chocolate and its products, which contains the oil and fat composition according to any embodiment of the present disclosure, and the content of the oil and fat composition is 5wt%-20wt% based on the total mass of the filled chocolate.

In a ninth aspect, the present invention provides a method for preparing a filled baked chocolate as claimed in claim 15. The present disclosure also provides such a method, which comprises the steps of:
(1) preparing the raw materials including the oil and fat composition of the present disclosure;
(2) mixing the raw materials uniformly, putting them into a ball mill, and grinding to a fineness of 20-30µm to obtain a chocolate shell slurry;
(3) choosing suitable soft chocolate oil and fat for filling, and grinding it to prepare the chocolate sauce for filling;
(4) using baked chocolate slurry as shell material and soft chocolate sauce for filling as the filling, pouring into filled chocolate by hand or a chocolate moulding machine, cooling and solidifying, and demoulding;
(5) placing the filled chocolate in a baking equipment at 200-400°C, preferably 200-300°C, more preferably 220-260°C, and baking for 80-300 seconds, such as 80-150 seconds, to prepare the filled baked chocolate.

In one or more preferred embodiments, the baking equipment is in a form selected from one or more of layer furnaces, open hearth furnaces, wind furnaces and tunnel ovens.

In one or more preferred embodiments, the baking heating is performed in a form selected from one or more of direct combustion, heat conduction, hot air convection, and infrared heating.

In one or more preferred embodiments, after baking, the filled baked chocolate is cooled and crystallized at 10-25°C, packaged after cooling, stabilized and aged at 20-30°C for 2-5 days.

### Description of the Drawings

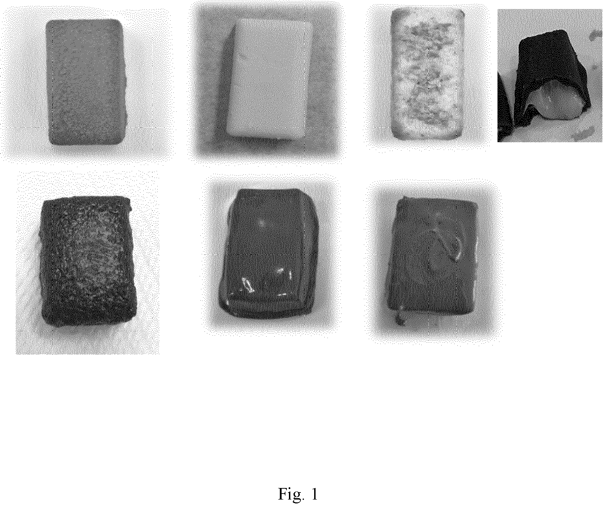

Figure 1 shows baked chocolate, baked chocolate crispy wafer, and filled baked chocolate at 50°C. Example 1, Example 2, Example 3, and Example 4 are in the first row from left to right. Comparative Example 1, Comparative Example 2, and Comparative Example 3 are in the second row from left to right.

### Detailed Description

It should be understood that, within the scope of the present disclosure, the above technical features of the present disclosure and the technical features specifically described below (such as in the examples) can be combined with each other to form a preferred technical solution.

In the first aspect, the present disclosure provides an oil and fat composition comprising, based on the total weight of the oil and fat composition, 10-40% of triglycerides having 30-40 carbon atoms, 50-80% of triglyceride having 42-52 carbon atoms, and 30-60% or 35-55% or 38-53% of X2U, where X represents a saturated fatty acid having a carbon number of 12 or more, U represents an unsaturated fatty acid having a carbon number of 16-18, and X2U represents a triglyceride of di-saturated fatty acid and monounsaturated fatty acid.

In the present disclosure, unless otherwise specified, X2U refers to a triglyceride containing two X fatty acid residues and one U fatty acid residue, wherein the two Xs may be fatty acid residues with the same carbon atom number or fatty acid residues with different carbon atom numbers.

In one or more preferred embodiments, based on the total weight of the oil and fat composition, the content of triglycerides having a carbon atom number of 30-40 is 20-40% or 25-40%.

In one or more preferred embodiments, based on the total weight of the oil and fat composition, the content of triglycerides having a carbon atom of 42-52 is 50-70% or 53-68%.

In one or more preferred embodiments, the content of X2U is 35-55% or 38-53% based on the total weight of the oil and fat composition.

In the present disclosure, unless otherwise specified, XU2 refers to a triglyceride containing one X fatty acid residue and two U fatty acid residues, wherein the two U may be fatty acid residues with the same carbon atom number or fatty acid residues with different carbon atom number.

In one or more preferred embodiments, based on the total weight of the oil and fat composition, the content of XU2 is 10-30%, wherein XU2 represents a triglyceride of monosaturated diunsaturated fatty acid.

In one or more preferred embodiments, the mass ratio of PPO/POP is 0.05-0.25, where PPO represents a triglyceride with palmitic acid at 1,2-position and oleic acid at 3-position, and POP represents a triglyceride with palmitic acid at 1,3-position, and oleic acid at 2-position.

In one or more preferred embodiments, the oil and fat composition comprises 50-80% of solid fat at 10°C.

In one or more preferred embodiments, the oil and fat composition comprises 60-80% of solid fat at 10°C.

In one or more preferred embodiments, the oil and fat composition comprises 65-80% of solid fat at 10°C.

In one or more preferred embodiments, the oil and fat composition comprises 20-30% of solid fat at 20°C.

In one or more preferred embodiments, the oil and fat composition comprises less than 25% of solid fat at 25°C.

In one or more preferred embodiments, the oil and fat composition comprises less than 20% of solid fat at 25°C.

In one or more preferred embodiments, the oil and fat composition comprises less than 15% of solid fat at 25°C.

In one or more preferred embodiments, the oil and fat composition comprises less than 10% of solid fat at 25°C.

In one or more preferred embodiments, the oil and fat composition comprises 5-10% of solid fat at 25°C.

In one or more preferred embodiments, the oil and fat composition comprises 0-10% of solid fat at 30°C.

In one or more preferred embodiments, the oil and fat composition comprises non-lauric acid type oil and fat and lauric acid type oil and fat, and the weight ratio of the non-lauric acid type oil and fat to the lauric acid type oil and fat is 1:2-8: 1.

In one or more preferred embodiments, the oil and fat composition comprises non-lauric acid type oil and fat and lauric acid type oil and fat, and the weight ratio of the non-lauric acid type oil and fat to the lauric acid type oil and fat is 1:1-4:1.

In one or more preferred embodiments, the lauric acid type oil and fat is fractionated palm kernel stearin and/or coconut oil having a melting point of 20-35°C; the non-lauric acid type oil and fat is palm fraction fat.

In one or more preferred embodiments, based on the total amount of the oil and fat composition, the oil and fat composition comprises 60% palm oil fraction, 20% coconut oil and 20% palm kernel oil fraction.

In one or more preferred embodiments, based on the total amount of the oil and fat composition, the oil and fat composition comprises 70% palm oil fraction, 10% coconut oil and 20% palm kernel oil fraction.

In one or more preferred embodiments, based on the total amount of the oil and fat composition, the oil and fat composition comprises 50% palm oil fraction, 20% coconut oil and 30% palm kernel oil fraction.

In the second aspect, the present disclosure provides a method for preparing an oil and fat composition, which comprises the steps:
(1) providing non-lauric acid oil and fat and lauric acid oil and fat;
(2) mixing the non-lauric acid oil and fat and the lauric acid type oil and fat from step (1) in a mass ratio of 1:2-8:1, preferably 1:1-4:1.

In one or more preferred embodiments, the non-lauric acid oil and fat and the lauric acid type oil and fat is mixed in a mass ratio of 1:1-4:1.

In one or more preferred embodiments, the lauric acid type oil and fat is fractionated palm kernel stearin and/or coconut oil having a melting point of 20-35°C; the non-lauric acid type oil and fat is palm oil fraction.

In a third aspect, the present disclosure provides a chocolate slurry comprising the oil and fat composition according to the present disclosure or the oil and fat composition prepared by the method according to the present disclosure, wherein the content of the oil and fat composition is 20-35%.

In one or more preferred solutions, based on the total mass of the chocolate slurry, the chocolate slurry comprises 20-35% of the oil and fat composition according to the present disclosure, 35-50% of sugar, 5-15% of cocoa powder, 0.1-0.5% of lecithin.

In one or more preferred embodiments, the sugar is one or more of sucrose, lactose, maltose, white granular sugar, caramel, fructose, and trehalose.

In one or more preferred embodiments, the chocolate slurry further comprises milk powder.

In one or more preferred embodiments, the milk powder is skimmed milk powder and/or whole milk powder.

In one or more preferred embodiments, the chocolate slurry further comprises yogurt powder and/or whey powder.

In one or more preferred embodiments, the chocolate slurry further comprises Mi Xi powder.

In a fourth aspect, the present disclosure provides a chocolate product, where the chocolate product comprises the oil and fat composition according to the present disclosure, or the chocolate product comprises the chocolate slurry according to the present disclosure.

In one or more preferred embodiments, the chocolate product is a chocolate coating or a chocolate bar or a filled chocolate.

In one or more preferred embodiments, the chocolate product is baked chocolate.

The baked chocolate of the present disclosure can be produced by a conventional method for producing common chocolates. That is, cocoa liquor, fat, cocoa powder, sugar, milk powder, etc. are appropriately selected and mixed to prepare a dough, and the solid is refined by a refiner, ball mill, or roll mill until reaching an appropriate particle size, kneaded, and added with flavors and the like to obtain chocolates.

In one or more preferred embodiments, the chocolate product is milk flavored baked chocolate, yogurt flavored baked chocolate, or baked rice wheat germ crispy chocolate.

In one or more preferred embodiments, the chocolate product is milk flavored baked chocolate, yogurt flavored baked chocolate, cheese flavored chocolate, strawberry flavored chocolate, mango flavored chocolate, baked rice milk germ crispy chocolate, and other flavored baked chocolates.

In one or more preferred embodiments, the baked chocolate is a chocolate product added with roasted nuts or cooked nuts of chopped hazelnut/chopped peanut/almond flakes/chopped badam/melon seeds and the like, and/or baked product of Oreo crumbles/biscuit crumbles/caramel crisps/egg roll crumbles and the like, and/or dried fruits such as dried strawberries/dried cranberries/dried blueberries/dried mangoes and the like, and/or matured cereal products and raw materials of rice flakes, oatmeal, sesame, starch, and maltodextrin and the like.

In a fifth aspect, the present disclosure provides a method for preparing baked chocolate, which comprises the steps of:
(1) preparing raw materials including the oil and fat composition of the present disclosure;
(2) mixing the raw materials uniformly, putting them into a ball mill, and grinding to a fineness of 20-30µm to obtain a chocolate slurry;
(3) insulating the chocolate slurry, then casting it into a mold, demoulding it to make a chocolate blank;
(4) placing the chocolate blank in a baking equipment at 200-400°C, preferably 200-300°C, more preferably 220-260°C, and baking for 80-300 seconds, such as 80-150 seconds, to prepare the baked chocolate and its products.

In a sixth aspect, the present disclosure provides a baked chocolate crispy coated baked food, which contains the oil and fat composition according to any embodiment of the present disclosure, wherein the content of the oil and fat composition is 5wt%-25wt% based on the total mass of the baked food.

In one or more preferred embodiments, the baked chocolate crispy coated baked food is baked rice milk crispy chocolate wafers, or baked chocolate crispy cakes, or baked chocolate crispy biscuits.

In a seventh aspect, the present disclosure provides a method for preparing a baked chocolate crispy coated baked food, which comprises the steps of:
(1) preparing raw materials including the oil and fat composition of the present disclosure;
(2) mixing the raw materials uniformly, putting them into a ball mill, and grinding to a fineness of 20-30µm to obtain a chocolate slurry;
(3) insulating the chocolate slurry and coating a baked product;
(4) placing the baked coating in a baking equipment at 200-400°C, preferably 200-300°C, more preferably 220-260°C and baking for 80-300 seconds, such as 80-150 seconds, to obtain a baked chocolate.

In one or more preferred embodiments, the method further comprises the step of sprinkling one or more of wheat germ, oatmeal, rice flakes and sesame on the surface of the coating of the baked food.

In an eighth aspect, the present disclosure provides a filled baked chocolate and its products, which contains the oil and fat composition according to any embodiment of the present disclosure, wherein the content of the oil and fat composition is 5wt%-20wt% based on the total mass of the filled chocolate.

The present disclosure also provides a method for preparing a filled baked chocolate, which comprises the steps of:
(1) preparing the raw materials including the oil and fat composition of the present disclosure;
(2) mixing the raw materials uniformly, putting them into a ball mill, and grinding to a fineness of 20-30µm to obtain a chocolate shell slurry;
(3) choosing suitable soft chocolate oil and fat for filing, and grinding it to prepare the chocolate sauce for filing;
(4) using baked chocolate slurry as shell material and soft chocolate sauce for filing as the filling, pouring into filled chocolate by hand or a chocolate casting machine, cooling and solidifying, and demoulding;
(5) placing the filled chocolate in a baking equipment at 200-400°C, preferably 200-300°C, more preferably 220-260°C, and baking for 80-300 seconds, such as 80-150 seconds, to prepare the filled baked chocolate.

In the present disclosure, the baking equipment may be an oven, which is in a form of layer furnaces, open hearth furnaces, wind furnaces and tunnel ovens, etc. The baking heating is performed in a form of direct combustion, heat conduction, hot air convection, and infrared heating, etc.

In a preferred embodiment, in the method described herein, after baking, the chocolate and its product is cooled and crystallized at 10-25°C, packaged after cooling, stabilized and aged at 20-30°C for 2-5 days.

The present disclosure also provides a chocolate product-containing food, wherein the chocolate product-containing food contains the oil and fat composition of the present disclosure; or the chocolate slurry of the present disclosure; or the chocolate product of the present invention.

In one or more preferred embodiments, the chocolate product-containing chocolate crispy coated baked food.

In one or more preferred embodiments, the chocolate crispy coated baked food is baked rice wheat germ crispy chocolate, or baked rice milk germ crispy chocolate wafer.

Source of raw materials:
Palm oil fraction: purchased from Kerry Specialty Oils (Shanghai) Co., Ltd.
Coconut oil: purchased from Kerry Specialty Oils (Shanghai) Co., Ltd.
Palm kernel oil fraction: purchased from Kerry Specialty Oils (Shanghai) Co., Ltd.
Lecithin: Qinhuangdao Jinhai Food Industry Co., Ltd.
Cocoa Liquor: Singapore Aoshi Chocolate Co., Ltd.
Cocoa Powder: Cargill Investment (China) Co., Ltd.
Whole milk powder: Fonterra Group
Skimmed milk powder: Fonterra Group
Yogurt powder: Shanghai Tuochen Trading Co., Ltd.

Test method:
Determination of triglycerides: gas chromatography, according to standard AOCS ce5-86
Determination of fatty acids: gas chromatography, according to standard AOCS cel-62
Melting point determination: capillary method, according to standard GBT24893-2010
Determination of solid fat content: NMR direct method, according to standard AOCS cd 16b-93
Hardness determination: physical property analyzer P/2N needle probe, puncture depth 20%, forward speed 5 mm/s, penetration speed 1 mm/s, backward speed 5 mm/s, the maximum peak force is the puncture force (g).

Equipment:
Physical property analyzer: TA.XTPlus, Stable Micro System, UK
Gas chromatograph: 7890A, Agilent Technologies Co., Ltd.
NMR Solid Fat Content Tester: PQ001, Shanghai Newmai Electronic Technology Co., Ltd.

### Preparation of oil and fat composition and chocolate

### Example 1: Cocoa Milk Flavored Baked Chocolate

The raw oils and fat were heated to melt. Based on the weight of raw oils, 60 parts of palm oil fraction (melting point: 30°C), 20 parts of coconut oil (melting point: 24°C), and 20 parts of palm kernel oil fraction fat (melting point: 32°C) were taken and mixed uniformly, heated under stirring to melt. The mixed oil was kept at 50-60°C, stirred at 1000rpm for 10min to be fully mixed evenly, thereby obtaining Oil and Fat Composition 1.

The Oil and Fat Composition 1 was used to prepare Cocoa Milk Flavored Baked Chocolate Product 1: Based on the total weight of various raw materials, 32 parts of the oil and fat composition, 0.4 part of lecithin, 4 parts of cocoa liquor, 37.6 parts of sugar, 6 parts of alkalized cocoa powder, 12 parts of whole milk powder, 8 parts of skimmed milk powder were taken and mixed uniformly. The mixture was put into a ball mill and grind to a fineness of 20-30 µm to obtain a chocolate slurry. The slurry was kept at 30-40°C and casted into a mold. The formed product was baked in an oven at 260°C for 100 seconds, then removed, cooled, and packaged.

### Example 2: Yogurt Milk Flavored Baked Chocolate

After heating and melting, based on the weight of various raw oils, 70 parts of palm oil fraction (melting point: 30°C), 20 parts of palm kernel oil fraction (melting point: 32°C), and 10 parts of coconut oil (melting point: 24°C) were taken and mixed uniformly, heated under stirring to dissolve. The mixed oil was kept at 50-60°C, stirred at 1000rpm for 10min to be fully mixed evenly, thereby obtaining Oil and Fat Composition 2.

The Oil and Fat Composition 2 was used to prepare Yogurt Milk Flavored Baked Chocolate Product: Based on the total weight of various raw materials, 35 parts of the oil and fat composition, 0.5 part of lecithin, 37.5 parts of sugar, 6 parts of yogurt powder, 11 parts of skimmed milk powder and 4 parts of whey powder were taken and mixed uniformly. The mixture was put into a ball mill and grind to a fineness of 20-30 µm to obtain a chocolate slurry. The slurry was kept at 30-40°C and casted into a mold. The formed product was baked in an oven at 220°C for 120 seconds, then removed, cooled, and packaged.

### Example 3: Baked Rice Milk Germ Crispy Chocolate Wafer

The raw oils were heated to melt. Based on the weight of raw oils, 50 parts of palm oil fraction (melting point: 30°C), 30 parts of palm kernel oil fraction (melting point: 24°C) and 20 parts of coconut oil (melting point: 24°C) were taken and mixed uniformly, heated under stirring to dissolve. The mixed oil was kept at 50-60°C, stirred at 1000rpm for 10min to be fully mixed evenly, thereby obtaining Oil and Fat Composition 3.

The Oil and Fat Composition 3 was used to prepare Baked Rice Wheat Germ Crispy Chocolate Wafer: Based on the total weight of various raw materials, 38 parts of the oil and fat composition, 0.5 part of lecithin, 37.5 parts of sugar, 20 parts of Mi Xi powder and 4 parts of whey powder were taken and mixed uniformly. The mixture was put into a ball mill and grind to a fineness of 20-30 µm to obtain a chocolate liquid. The liquid was kept at 30-40°C and subjected to wafer coating. The chocolate-coated wafer surface was sprinkled with wheat germ. The formed product was baked in an oven at 250°C for 120 seconds, then removed, cooled, and packaged.

### Example 4: Baked Rice Wheat Germ Crispy Chocolate Wafer

The Oil and Fat Composition 2 was used to prepare Baked Rice Wheat Germ Crispy Chocolate Wafer: Based on the total weight of raw materials, 38 parts of the oil and fat composition, 0.5 part of lecithin, 37.5 parts of sugar, 20 parts of Mi Xi powder and 4 parts of whey powder were taken and mixed uniformly. The mixture was put into a ball mill and grind to a fineness of 20-30 µm to obtain a chocolate slurry. The slurry was kept at 30-40°C and subjected to wafer coating. The chocolate-coated wafer surface was sprinkled with wheat germ. The formed product was baked in an oven at 250°C for 120 seconds, then removed, cooled, and packaged.

### Example 5: Milk-flavored Baked Filled Chocolate

The Oil and Fat Composition 3 was used to prepare Milk-flavored Baked Filled Chocolate: Based on the total weight of various raw materials, 32 parts of the oil and fat composition, 0.4 part of lecithin, 4 parts of cocoa liquor, 37.6 parts of sugar, 6 parts of alkalized cocoa powder, 12 parts of whole milk powder, 8 parts of skimmed milk powder were taken and mixed uniformly. The mixture was put into a ball mill and grind to a fineness of 20-30 µm to obtain a chocolate shell slurry. A suitable soft white chocolate sauce for filling was selected. The slurry was kept at 30-40°C and hand-poured and molded to engrave by hand, filled, or moulded by a moulding machine. The formed product was baked in an oven at 260°C for 150 seconds, then removed, cooled, and packaged.

### Comparative Example 1:

The various raw oils were heated to melt. Based on the weight of various raw oils, 20 parts of palm oil fraction (melting point: 50°C), 36 parts of coconut oil (melting point: 24°C), 36 parts of palm kernel oil fraction (melting point: 32°C) and 8 parts of glyceryl monostearate were taken and mixed uniformly, heated under stirring to dissolve. The mixed oil was kept at 60-70°C, stirred at 1000rpm for 10min to be fully mixed evenly, thereby obtaining Comparative Oil and Fat Composition 1.

The Comparative Oil and Fat Composition 1 was used to prepare Comparative Baked Chocolate Product 1: Based on the total weight of various raw materials, 30 parts of the oil and fat composition, 0.5 part of lecithin, 37.5 parts of sugar, 10 parts of alkalized cocoa powder, 12 parts of skimmed milk powder and 10 parts of whey powder were taken and mixed uniformly. The mixture was put into a ball mill and grind to a fineness of 20-30 µm to obtain a chocolate slurry. The slurry was kept at 45-50°C and casted into a mold. The formed product was baked in an oven at 280°C for 220 seconds, then removed, cooled, and packaged.

### Comparative Example 2:

The various raw oils were heated to melt. Based on the weight of various raw oils, 20 parts of palm oil fraction (melting point: 30°C), 40 parts of coconut oil (melting point: 24°C), and 40 parts of palm kernel oil fraction (melting point: 32°C) were taken and mixed uniformly, heated under stirring to dissolve. The mixed oil was kept at 50-60°C, stirred at 1000rpm for 10min to be fully mixed evenly, thereby obtaining Comparative Oil and Fat Composition 2.

The Comparative Oil and Fat Composition 2 was used to prepare Comparative Baked Chocolate Product 2: Based on the total weight of raw materials, 40 parts of the oil and fat composition, 0.5 part of lecithin, 37.5 parts of sugar, 16 parts of alkalized cocoa powder, and 6 parts of skimmed milk powder were taken and mixed uniformly. The mixture was put into a ball mill and grind to a fineness of 20-30 µm to obtain a chocolate slurry. The slurry was kept at 40-50°C and casted into a mold. The formed product was baked in an oven at 150°C for 120 seconds, then removed, cooled, and packaged.

### Comparative Example 3:

The various raw oils were heated to melt. Based on the weight of various raw oils, 22 parts of palm oil fraction (melting point: 60°C), 35 parts of coconut oil (melting point: 24°C), 35 parts of palm kernel oil fraction (melting point: 32°C) and 8 parts of fully hydrogenated rapeseed oil (melting point: 60°C) were taken and mixed uniformly, heated under stirring to dissolve. The mixed oil was kept at 70-80°C, stirred at 1000rpm for 15min to be fully mixed evenly, thereby obtaining Comparative Oil and Fat Composition 3.

The Comparative Oil and Fat Composition 3 was used to prepare Comparative Baked Chocolate Crispy Coated Wafer Product 3: Based on the total weight ofraw materials, 38 parts of the oil and fat composition, 0.5 part of lecithin, 37.5 parts of sugar, 12 parts of alkalized cocoa powder, 8 parts of skimmed milk powder and 4 parts of whey powder were taken and mixed uniformly. The mixture was put into a ball mill and grind to a fineness of 20-30 µm to obtain a chocolate slurry. The slurry was kept at 30-40°C and subjected to wafer coating. The formed product was baked in an oven at 200°C for 30 seconds, then removed, cooled, and packaged.

### Comparative Example 4:

The raw oils were heated to melt. Based on the weight of various raw oils, 70 parts of palm oil fraction (melting point: 60°C), 10 parts of palm kernel oil fraction (melting point: 32°C) and 20 parts of palm oil fraction (melting point: 30°C) were taken and mixed uniformly, heated under stirring to dissolve. The mixed oil was kept at 70-80°C, stirred at 1000rpm for 15min to be fully mixed evenly, thereby obtaining Comparative Oil and Fat Composition 4.

The Comparative Oil and Fat Composition 4 was used to prepare Comparative Baked Chocolate Crispy Coated Wafer Product 4: Based on the total weight of various raw materials, 35 parts of the oil and fat composition, 0.5 part of lecithin, 37.5 parts of white granular sugar powder, 8 parts of alkalized cocoa powder, 12 parts of skimmed milk powder, 4 parts of whey powder and 3 parts of lactose were taken and mixed uniformly. The mixture was put into a ball mill and grind to a fineness of 20-30 µm to obtain a chocolate slurry. The slurry was kept at 40-50°C and subjected to wafer coating. The formed product was baked in an oven at 200°C for 50 seconds, then removed, cooled, and packaged.

### Test of the oil and fat composition

### 1. TAG profile

The TAG profiles of the oil and fat compositions of Examples 1-3 and Comparative Examples 1-3 were analyzed using gas chromatography detection technology, and the results are shown in Table 1.

**Table 1: TAG profile of oil and fat composition (unit %)**

| | Example 1 | Example 2 | Example 3 | Comparative Example 1 | Comparative Example 2 | Comparative Example 3 | Comparative Example 4 |
|---|---|---|---|---|---|---|---|
| C30-40 | 36.62 | 28.05 | 39.02 | 55.97 | 52.26 | 54.67 | 8.89 |
| C42-52 | 63.69 | 67.75 | 53.74 | 34.53 | 37.45 | 12.78 | 88.75 |
| XU2 | 13.32 | 14.98 | 11.37 | 4.64 | 5.74 | 4.92 | 15.50 |
| X2U | 41.77 | 51.76 | 39.88 | 15.94 | 21.90 | 16.61 | 45.24 |
| PPO/POP | 0.15 | 0.18 | 0.22 | 0.31 | 0.30 | 0.28 | 0.29 |

### 2. Detection of solid fat content

The SFCs of the oil and fat compositions of Examples 1-3 and Comparative Examples 1-4 were analyzed by pulsed nuclear magnetic resonance, and the results are shown in Table 2.

**Table 2: Solid fat content of oil and fat compositions at different temperatures**

| | Solid fat content SFC | | | | | |
|---|---|---|---|---|---|---|
| | 10°C | 20°C | 25°C | 30°C | 35°C | 40°C |
| Example 1 | 75.84 | 22.85 | 7.12 | 0.5 | 0 | 0 |
| Example 2 | 75.74 | 23.81 | 8.10 | 0.97 | 0 | 0 |
| Example 3 | 67.95 | 17.29 | 6.51 | 2.52 | 0 | 0 |
| Com. Example 1 | 76.54 | 36.65 | 21.67 | 10.61 | 3.23 | 2.19 |
| Com. Example 2 | 82.49 | 35.06 | 18.43 | 0 | 0 | 0 |
| Com. Example 3 | 83.20 | 41.56 | 21.37 | 10.80 | 4.17 | 2.80 |
| Com. Example 4 | 73.71 | 41.29 | 26.71 | 18.42 | 10.41 | 6.80 |

### Quality evaluation of chocolate product

### 1. Sensory evaluation:

The baked chocolate and baked chocolate crisp wafer products prepared by the oil and fat compositions of Examples 1-3 and Comparative Examples 1-4 were subjected to sensory evaluation according to the scoring standards in Table 3 and Table 4, and the scoring results are shown in Table 5.

**Table 3: Sensory evaluation standard for baked chocolate and baked filled chocolate products**

| Sensory Index | Full Marks (unit: points) | Evaluation Standard |
|---|---|---|
| Heat resistance | 30 | placed at 60°C for 10h: |
| | | complete shape, no stick to bag, and no deformation by hand (25~30), complete shape, slightly sticky to bag, slightly deformed by hand (20-25); slightly deformed shape, sticky to bag, deformed by hand (10~20), completely melted (0~10) |
| Flavor release | 25 | quickly released and full-bodied flavor (20~25); relatively fast released and relatively rich flavor (10-20); slowly released, no strong flavor (0~10) |
| Taste | 25 | thin and brittle outside, soft inside, quickly melts in mouth, good mouthfeeling, and no waxy feeling (20-25); hard and brittle outside, relatively soft inside, relatively quickly melts in mouth, relatively good mouth feeling (10-20); hard and brittle outside and inside, relatively slowly melts in mouth and relatively heavy waxy feeling (0-10) |
| Operability | 10 | easy to operate the molding, no deformation during baking (7~10); relatively easy to operate the molding, slightly deformed during baking(4~7), relatively difficult to operate the molding, deformed during baking (0~4) |
| Whether hydrogenated ingredient is contained | 10 | No hydrogenated components (10); a small amount of hydrogenated components is contained (5-9); a large amount of hydrogenated components is contained (0-5) |

**Table 4: Sensory evaluation standard for baked chocolate crispy coated wafer**

| Sensory Index | Full marks (unit points) | evaluation standard |
|---|---|---|
| Heat resistance | 30 | placed at 60°C for 10h: the shape of the baked chocolate coating is kept completely, not sticky to bag, and not deformed by hand (25~30); the shape of the baked chocolate coating is kept completely, slightly sticky to bag, and slightly deformed by hand(20-25); the shape of the baked chocolate coating is slightly deformed, sticky to bag, and deformed by hand (10~20), the baked chocolate coating is completely melted, unable to be formed (0~10) |
| Flavor release | 25 | quickly released and full-bodied flavor (20~25); relatively fast released and relatively rich flavor (10-20); slowly released, not strong flavor (0~10) |
| Taste | 25 | the baked chocolate coating is thin and brittle without waxy feeling (20-25); the baked chocolate coating is slightly hard and brittle with a slight waxy feeling inside (10-20); the baked chocolate coating is relatively soft with relatively heavy waxy feeling (0-10) |
| Operability | 10 | easy to operate the coating, no deformation during baking (7~10); relatively easy to operate the coating, slightly deformed during baking(4~7), relatively difficult to operate the coating, melted and deformed during baking (0~4) |
| Whether hydrogenated ingredient is contained | 10 | No hydrogenated components (10); a small amount of hydrogenated components is contained (5-9); a large amount of hydrogenated components is contained (0-5) |

**Table 5: Sensory evaluation of baked chocolate, baked chocolate crispy wafer***

| | Ex. 1 | Ex. 2 | Ex.3 | Ex.4 | Ex.5 | Com. Ex.1 | Com. Ex.2 | Com. Ex.3 | Com. Ex.4 |
|---|---|---|---|---|---|---|---|---|---|
| Heat resistance | 26 | 27 | 29 | 28 | 28 | 27 | 6 | 12 | 28 |
| Flavor release | 22 | 22 | 20 | 22 | 24 | 15 | 15 | 10 | 13 |
| Taste | 21 | 22 | 20 | 21 | 23 | 5 | 18 | 10 | 5 |
| Operability | 6 | 6 | 8 | 6 | 5 | 5 | 9 | 8 | 5 |
| Whether hydrogenated ingredient is contained | 10 | 10 | 10 | 10 | 10 | 10 | 10 | 5 | 10 |
| Overall rating | 85 | 87 | 87 | 87 | 90 | 62 | 58 | 45 | 61 |

| | | | | | | | | | |
|---|---|---|---|---|---|---|---|---|---|
| * note: the overall rating range is 0-100. The higher the score, the better the effect of this indicator. | | | | | | | | | |

According to Table 5, it can be seen that:
The cocoa milk flavored baked chocolate and yogurt flavored baked chocolate prepared from the oil and fat compositions of Examples 1 and 2 still had good heat resistance at 50°C and did not melt or deform (see Figure 1 for Examples 1 and 2). And the taste was crispy outside and soft inside, with good mouth-melting properties, rapid release and rich flavor, and a high sensory score.

The baked rice milk germ crispy chocolate wafer obtained from the oil and fat compositions of Examples 2 and 3 according to the corresponding preparation process still had good heat resistance at 50°C, did not melt or deform, and the baked coating tastes crispy and well matched with the internal wafers, having strong flavor of rice and wheat germ, and a high sensory score.

The baked filled chocolate prepared from the oil and fat composition of Example 2 according to the corresponding preparation process still had good heat resistance at 50°C, did not melt or deform, and had a crispy outer shell, soft and silky filling with rich flavor, and a unique combination of layered mouthfeel, and a high sensory score.

The baked chocolate prepared from the oil and fat composition of Comparative Example 1 had good heat resistance at 50°C and did not melt or deform (see Figure 1). However, the outer layer of the baked chocolate tasted hard and dry and the mouth-melting property of the inside was poor with relatively strong waxy feeling, and a low sensory score.

The baked chocolate prepared from the oil and fat composition of Comparative Example 2 had good mouth-melting properties with rapid release and rich flavor, but the outer layer failed to form a shell with crispy taste, and had poor heat resistance at 50°C and could not maintain its shape.

With respect to the baked chocolate coating wafers prepared from the oil and fat compositions of Comparative Examples 3 and 4, the outer layer failed to form a shell with crispy taste, and the coating surface had poor heat resistance at 50°C and was unable to maintain its shape. In addition, when consumed at room temperature, due to the oil and fat composition ratio, the coated chocolate had poor mouth-melting properties and relatively strong waxy feeling. Moreover, Comparative Example 3 contained hydrogenated ingredients, and the overall sensory evaluation was low.

### 2. Texture hardness test

A TA.XTPlus physical property analyzer was used to determine the puncture hardness of the baked chocolate. The results are shown in Table 6.

**Table 6: The puncture hardness of the baked chocolate**

| | Example 1 | Example 2 | Com. Example 1 | Com. Example 2 |
|---|---|---|---|---|
| puncture hardness(g) | 400.31 | 325.42 | 706.56 | 113.13 |

According to the results in Table 6, it can be seen that Example 1 and Example 2 had moderate hardness. Comparative Example 1 had a relatively high hardness and Comparative Example 2 was too soft.

## Claims

1. An oil and fat composition comprising, based on the total weight of the oil and fat composition, 10-40% of triglycerides having 30-40 carbon atoms, 50-80% of triglyceride having 42-52 carbon atoms, and 30-60% or 35-55% or 38-53% of X2U, where X represents a saturated fatty acid having a carbon number of 12 or more, U represents an unsaturated fatty acid having a carbon number of 16-18, and X2U represents a triglyceride of di-saturated monounsaturated fatty acid; wherein the oil and fat composition is a mixture of non-lauric acid type oil and fat and lauric acid type oil and fat mixed in a mass ratio of 1:1-4:1, and the lauric acid type oil and fat is fractionated palm kernel oil stearin and coconut oil having a melting point of 20-35°C, wherein the non-lauric acid type oil and fat is palm oil fraction.

2. The oil and fat composition according to claim 1, wherein the oil and fat composition satisfies one or more of the following conditions:
(1) based on the total mass of the oil and fat composition, the amount of XU2 is 10-30%, wherein XU2 represents a triglyceride of a monosaturated di-unsaturated fatty acid;
(2) the mass ratio of PPO/POP is 0.05-0.25, where PPO represents a triglyceride with palmitic acid at 1,2-position and oleic acid at 3-position, and POP represents a triglyceride with palmitic acid at 1,3-position, and oleic acid at 2-position;
(3) the content of solid fat at 20°C is 20-30%;
(4) the content of solid fat at 30°C is 0-10%.

3. The oil and fat composition according to claim 1 or 2, wherein the oil and fat composition comprises 50-80% of solid fat at 10°C; preferably, the oil and fat composition comprises 60-80% of solid fat at 10°C; more preferably, the oil and fat composition comprises 65-80% of solid fat at 10°C.

4. The oil and fat composition according to claim 1, 2 or 3, wherein the oil and fat composition comprises less than 25% of solid fat at 25°C; preferably, the oil and fat composition comprises less than 20% of solid fat at 25°C; more preferably, the oil and fat composition comprises less than 15% of solid fat at 25°C; more preferably, the oil and fat composition comprises less than 10% of solid fat at 25°C; more preferably, the oil and fat composition comprises 5-10% of solid fat at 25°C.

5. The oil and fat composition according to claim 1, wherein:
based on the total amount of the oil and fat composition, the oil and fat composition comprises 60% palm oil fraction, 20% coconut oil and 20% palm kernel oil fraction; or
based on the total amount of the oil and fat composition, the oil and fat composition comprises 70% palm oil fraction, 10% coconut oil and 20% palm kernel oil fraction; or
based on the total amount of the oil and fat composition, the oil and fat composition comprises 50% palm oil fraction, 20% coconut oil and 30% palm kernel oil fraction.

6. A chocolate slurry comprising the oil and fat composition of any of claims 1-5, wherein based on the total mass of the chocolate slurry, the amount of the oil and fat composition is 20-40% or 20-35%.

7. The chocolate slurry according to claim 6, wherein the chocolate slurry comprises 20-35% of the oil and fat composition according to the present disclosure, 35-50% of sugar, 5-15% of cocoa powder, 0.1-0.5% of lecithin; preferably, the sugar is one or more of sucrose, lactose, maltose, white granular sugar, caramel, fructose, and trehalose.

8. The chocolate slurry according to claim 6 or 7, wherein:
the chocolate slurry further comprises milk powder; preferably, the milk powder is skimmed milk powder and/or whole milk powder; and/or
the chocolate slurry further comprises yogurt powder and/or whey powder.

9. A baked chocolate comprising the slurry according to any one of claims 6-8 or the oil and fat composition of any of claims 1-5; based on the mass of the baked chocolate, the amount of the oil and fat composition is 20-40% or 20-35%;
preferably, the baked chocolate is milk flavored baked chocolate, yogurt flavored baked chocolate, strawberry flavored chocolate, mango flavored chocolate, baked rice milk germ crispy chocolate or cheese flavored baked chocolates.

10. The baked chocolate according to claim 9, wherein the baked chocolate further comprises one or more of sugar, lecithin, milk powder, yogurt powder, and whey powder; or the baked chocolate is a chocolate product added with one or more of baked nuts, cooked nuts, baked products, dried fruits, and matured cereal products and raw materials; preferably, the baked nuts or cooked nuts are selected from one or more of chopped hazelnut, chopped peanut, almond flakes, chopped badam and melon seeds; the baked product is selected from one or more of Oreo crumbles, biscuit crumbles, caramel crisps and egg roll crumbles; the dried fruit is selected from one or more of dried strawberries, dried cranberries, dried blueberries and dried mangoes; and the matured cereal products and raw materials are selected from one or more of rice flakes, oatmeal, sesame, starch and maltodextrin.

11. A method for preparing a baked chocolate as defined in claim 9, which comprises the steps of:
(1) preparing raw materials including the oil and fat composition according to any one of claims 1-5;
(2) mixing the raw materials uniformly, putting them into a ball mill, and grinding to a fineness of 20-30µm to obtain a chocolate slurry;
(3) insulating the chocolate slurry, then casting it into a mold to make a chocolate blank;
(4) placing the chocolate blank in a baking equipment at 200-400°C, preferably 200-300°C, more preferably 220-260°C, and baking for 80-300 seconds, such as 80-150 seconds, to prepare the baked chocolate.

12. A chocolate coated baked food comprising the oil and fat composition according to any one of claims 1-5, wherein, based on the total mass of the baked food, the amount of the oil and fat composition is 5%-25%; preferably, the baked food is baked rice milk germ crispy chocolate.

13. A method for preparing a baked chocolate crispy coated baked food as defined in claim 12, which comprises the steps of:
(1) preparing raw materials including the oil and fat composition according to any one of claims 1-5;
(2) mixing the raw materials uniformly, putting them into a ball mill, and grinding to a fineness of 20-30µm to obtain a chocolate slurry;
(3) insulating the chocolate slurry for baked product coating and coating a wafer;
(4) placing the wafer coating in a baking equipment at 200-400°C, preferably 200-300°C, more preferably 220-260°C and baking for 80-300 seconds, such as 80-150 seconds, to obtain a baked chocolate crispy coated baked food, preferably, the method further comprises sprinkling wheat germ on the wafer coating.

14. A filled baked chocolate comprising the oil and fat composition according to any one of claims 1-5, wherein, based on the total mass of the filled chocolate, the content of the oil and fat composition is Swt%-20wt%.

15. A method for preparing a filled baked chocolate as defined in claim 14, which comprises the steps of:
(1) preparing the raw materials including the oil and fat composition of any one of claims 1-5;
(2) mixing the raw materials uniformly, putting them into a ball mill, and grinding to a fineness of 20-30µm to obtain a chocolate shell slurry;
(3) choosing suitable soft chocolate oil and fat for filing, and grinding it to prepare the chocolate sauce for filing;
(4) using baked chocolate slurry as shell material and soft chocolate sauce for filing as the filling, pouring into filled chocolate by hand or a chocolate moulding machine, cooling and solidifying, and demoulding;
(5) placing the filled chocolate in a baking equipment at 200-400°C, preferably 200-300°C, more preferably 220-260°C, and baking for 80-300 seconds, such as 80-150 seconds, to prepare the filled baked chocolate.

## Patentansprüche

1. Öl- und Fettzusammensetzung, umfassend, basierend auf dem Gesamtgewicht der Öl- und Fettzusammensetzung, zu 10-40 % Triglyceride, die 30-40 Kohlenstoffatome aufweisen, zu 50-80 % Triglyceride, die 42-52 Kohlenstoffatome aufweisen, und zu 30-60 % oder zu 35-55 % oder zu 38-53 % X2U, wobei X eine gesättigte Fettsäure darstellt, die eine Kohlenstoffzahl von 12 oder mehr aufweist, U eine ungesättigte Fettsäure darstellt, die eine Kohlenstoffzahl von 16-18 aufweist und X2U ein Triglycerid einer zweifach gesättigten einfach ungesättigten Fettsäure darstellt; wobei die Öl- und Fettzusammensetzung eine Mischung aus Öl und Fett einer Nicht-Laurinsäureart und Öl und Fett der Laurinsäureart ist, die in einem Massenverhältnis von 1 : 1-4 : 1 gemischt sind, und das Öl und Fett der Laurinsäureart fraktioniertes Palmkernölstearin und Kokosnussöl ist, das einen Schmelzpunkt von 20-35 °C aufweist, wobei das Öl und Fett der Nicht-Laurinsäureart eine Palmölfraktion ist.

2. Öl- und Fettzusammensetzung nach Anspruch 1, wobei die Öl- und Fettzusammensetzung eine oder mehrere der folgenden Bedingungen erfüllt:
(1) basierend auf der Gesamtmasse der Öl- und Fettzusammensetzung, die Menge an XU2 10-30 % beträgt, wobei XU2 ein Triglycerid einer einfach ungesättigten zweifach ungesättigten Fettsäure darstellt;
(2) das Massenverhältnis von PPO/POP 0,05-0,25 beträgt, wobei PPO ein Triglycerid mit Palmitinsäure in 1,2-Position und Ölsäure in 3-Position darstellt, und POP ein Triglycerid mit Palmitinsäure an der 1,3-Position und Ölsäure an der 2-Position darstellt;
(3) der Gehalt an festem Fett bei 20 °C 20-30 % beträgt;
(4) der Gehalt an festem Fett bei 30 °C 0-10 % beträgt.

3. Öl- und Fettzusammensetzung nach Anspruch 1 oder 2, wobei die Öl- und Fettzusammensetzung zu 50-80 % festes Fett bei 10 °C umfasst; vorzugsweise die Öl- und Fettzusammensetzung zu 60-80 % festes Fett bei 10 °C umfasst; mehr bevorzugt die Öl- und Fettzusammensetzung zu 65-80 % festes Fett bei 10 °C umfasst.

4. Öl- und Fettzusammensetzung nach Anspruch 1, 2 oder 3, wobei die Öl- und Fettzusammensetzung weniger als 25 % festes Fett bei 25 °C umfasst; vorzugsweise die Öl- und Fettzusammensetzung weniger als 20 % festes Fett bei 25 °C umfasst; mehr bevorzugt die Öl- und Fettzusammensetzung weniger als 15 % festes Fett bei 25 °C umfasst; mehr bevorzugt die Öl- und Fettzusammensetzung weniger als 10 % festes Fett bei 25 °C umfasst; mehr bevorzugt die Öl- und Fettzusammensetzung 5-10 % festes Fett bei 25 °C umfasst.

5. Öl- und Fettzusammensetzung nach Anspruch 1, wobei:
basierend auf der Gesamtmenge der Öl- und Fettzusammensetzung die Öl- und Fettzusammensetzung zu 60 % Palmölfraktion, zu 20 % Kokosöl und zu 20 % Palmkernölfraktion umfasst; oder
basierend auf der Gesamtmenge der Öl- und Fettzusammensetzung die Öl- und Fettzusammensetzung zu 70 % Palmölfraktion, zu 10 % Kokosöl und zu 20 % Palmkernölfraktion umfasst; oder
basierend auf der Gesamtmenge der Öl- und Fettzusammensetzung die Öl- und Fettzusammensetzung zu 50 % Palmölfraktion, zu 20 % Kokosöl und zu 30 % Palmkernölanteil umfasst.

6. Schokoladenbrei, umfassend die Öl- und Fettzusammensetzung nach einem der Ansprüche 1 bis 5, wobei die Menge der Öl- und Fettzusammensetzung, basierend auf der Gesamtmasse des Schokoladenbreis, 20-40 % oder 20-35 % beträgt.

7. Schokoladenbrei nach Anspruch 6, wobei der Schokoladenbrei 20-35 % der Öl- und Fettzusammensetzung gemäß der vorliegenden Offenbarung, zu 35-50 % Zucker, zu 5-15 % Kakaopulver, zu 0,1-0,5 % Lecithin umfasst; vorzugsweise der Zucker eine oder mehrere von Saccharose, Laktose, Maltose, weißer Kristallzucker, Karamell, Fruktose und Trehalose ist.

8. Schokoladenbrei nach Anspruch 6 oder 7, wobei:
der Schokoladenbrei ferner Milchpulver umfasst; vorzugsweise das Milchpulver Magermilchpulver und/oder Vollmilchpulver ist; und/oder
der Schokoladenbrei ferner Joghurtpulver und/oder Molkenpulver umfasst.

9. Gebackene Schokolade, umfassend den Brei nach einem der Ansprüche 6 bis 8 oder die Öl- und Fettzusammensetzung nach einem der Ansprüche 1 bis 5; basierend auf der Masse der gebackenen Schokolade, die Menge der Öl- und Fettzusammensetzung 20-40 % oder 20-35 % beträgt;
vorzugsweise die gebackene Schokolade gebackene Schokolade mit Milchgeschmack, gebackene Schokolade mit Joghurtgeschmack, Schokolade mit Erdbeergeschmack, Schokolade mit Mangogeschmack, gebackene knusprige Reismilchkeimschokolade oder gebackene Schokolade mit Käsegeschmack ist.

10. Gebackene Schokolade nach Anspruch 9, wobei die gebackene Schokolade ferner eines oder mehrere von Zucker, Lecithin, Milchpulver, Joghurtpulver und Molkenpulver umfasst; oder die gebackene Schokolade ein Schokoladenprodukt ist, dem eines oder mehrere von gebackenen Nüssen, gekochten Nüssen, gebackenen Produkten, Trockenfrüchten und gereiften Getreideprodukten und Rohstoffen zugesetzt sind; vorzugsweise die gebackenen Nüsse oder die gekochten Nüsse aus einer oder mehreren von gehackten Haselnüssen, gehackten Erdnüssen, Mandelblättchen, gehackten Mandeln und Melonenkernen ausgewählt ist; das gebackene Produkt aus einem oder mehreren von Oreo-Streusel, Keksstreusel, Karamellknusper und Eggroll-Streusel ausgewählt ist; die Trockenfrüchte aus einer oder mehreren von getrockneten Erdbeeren, getrockneten Cranberries, getrockneten Blaubeeren und getrockneten Mangos ausgewählt sind; und die gereiften Getreideprodukte und Rohstoffe aus einem oder mehreren von Reisflocken, Haferflocken, Sesam, Stärke und Maltodextrin ausgewählt sind.

11. Verfahren zum Zubereiten einer gebackenen Schokolade nach Anspruch 9, das die Schritte umfasst:
(1) Zubereiten von Rohmaterialien, einschließlich der Öl- und Fettzusammensetzung nach einem der Ansprüche 1 bis 5;
(2) gleichmäßiges Mischen der Rohmaterialien, Geben dieser in eine Kugelmühle und Mahlen auf eine Feinheit von 20-30 µm, um einen Schokoladenbrei zu erhalten;
(3) Isolieren des Schokoladenbreis, anschließend Gießen dieses in eine Form, um einen Schokoladenrohling zuzubereiten;
(4) Platzieren des Schokoladenrohlings in einer Backanlage bei 200-400 °C, vorzugsweise 200-300 °C, mehr bevorzugt 220-260 °C, und Backen für 80-300 Sekunden, wie 80-150 Sekunden, um die gebackene Schokolade zuzubereiten.

12. Mit Schokolade überzogene gebackene Speise, umfassend die Öl- und Fettzusammensetzung nach einem der Ansprüche 1 bis 5, wobei, basierend auf der Gesamtmasse der gebackenen Speise, die Menge der Öl- und Fettzusammensetzung 5 %-25 % beträgt; vorzugsweise das Backprodukt eine gebackene knusprige Reismilchkeimschokolade ist.

13. Verfahren zum Zubereiten einer gebackenen, knusprigen, mit Schokolade überzogenen gebackenen Speise nach Anspruch 12, das die Schritte umfasst:
(1) Zubereiten von Rohmaterialien, einschließlich der Öl- und Fettzusammensetzung nach einem der Ansprüche 1 bis 5;
(2) gleichmäßiges Mischen der Rohmaterialien, Geben dieser in eine Kugelmühle und Mahlen auf eine Feinheit von 20-30 µm, um einen Schokoladenbrei zu erhalten;
(3) Isolieren des Schokoladenbreis zum Überziehen des gebackenen Produkts und Überziehen einer Waffel;
(4) Platzieren der Waffelbeschichtung in einer Backanlage bei 200-400 °C, vorzugsweise 200-300 °C, mehr bevorzugt 220-260 °C und Backen für 80-300 Sekunden, wie 80-150 Sekunden, um eine gebackene, knusprige mit Schokolade überzogene gebackene Speise zu erhalten, wobei das Verfahren vorzugsweise ferner ein Bestreuen der Waffelbeschichtung mit Weizenkeimen umfasst.

14. Gefüllte gebackene Schokolade, umfassend die Öl- und Fettzusammensetzung nach einem der Ansprüche 1 bis 5, wobei der Gehalt der Öl- und Fettzusammensetzung, basierend auf der Gesamtmasse der gefüllten Schokolade, 5 Gew.-%-20 Gew.-% beträgt.

15. Verfahren zum Zubereiten einer gefüllten gebackenen Schokolade nach Anspruch 14, das die Schritte umfasst:
(1) Zubereiten der Rohstoffe einschließlich der Öl- und Fettzusammensetzung eines der Ansprüche 1 bis 5;
(2) gleichmäßiges Mischen der Rohmaterialien, Geben dieser in eine Kugelmühle und Mahlen auf eine Feinheit von 20-30 µm, um einen Schokoladenschalenbrei zu erhalten;
(3) Wählen eines geeigneten weichen Schokoladenöls und -fetts zum Füllen und Mahlen dieses, um die Schokoladensauce zum Füllen zuzubereiten;
(4) Verwenden des gebackenen Schokoladenbreis als Schalenmaterial und der weichen Schokoladensoße zum Füllen als die Füllung, Eingießen in gefüllte Schokolade per Hand oder einer Schokoladenformmaschine, Abkühlen und Erstarren lassen und Entformen;
(5) Platzieren der gefüllten Schokolade in eine Backanlage bei 200-400 °C, vorzugsweise 200-300 °C, mehr bevorzugt 220-260 °C, und Backen für 80-300 Sekunden, wie 80-150 Sekunden, um die gefüllte gebackene Schokolade zuzubereiten.

## Revendications

1. Composition d'huile et de graisse comprenant, en fonction du poids total de la composition d'huile et de graisse, 10 à 40 % de triglycérides ayant 30 à 40 atomes de carbone, 50 à 80 % de triglycéride ayant 42 à 52 atomes de carbone, et 30 à 60 % ou 35 à 55 % ou 38 à 53 % de X2U, où X représente un acide gras saturé ayant un nombre de carbones de 12 ou plus, U représente un acide gras insaturé ayant un nombre de carbones de 16 à 18, et X2U représente un triglycéride d'acide gras mono-insaturé di-saturé ; dans laquelle la composition d'huile et de graisse est un mélange d'huile et graisse de type acide non laurique et d'huile et de graisse de type acide laurique mélangées dans un rapport massique de 1:1 à 4:1, et l'huile et la graisse de type acide laurique sont de la stéarine d'huile de palmiste fractionnée et de l'huile de coco ayant un point de fusion de 20 à 35 °C, dans laquelle l'huile et la graisse de type acide non laurique sont une fraction d'huile de palme.

2. Composition d'huile et de graisse selon la revendication 1, dans laquelle la composition d'huile et de graisse respecte une ou plusieurs des conditions suivantes :
(1) en fonction de la masse totale de la composition d'huile et de graisse, la quantité de XU2 va de 10 à 30 %, dans laquelle XU2 représente un triglycéride d'un acide gras di-insaturé mono-saturé ;
(2) le rapport massique de PPO/POP va de 0,05 à 0,25, où PPO représente un triglycéride avec de l'acide palmitique en position 1,2 et de l'acide oléique en position 3, et POP représente un triglycéride avec de l'acide palmitique en position 1,3, et de l'acide oléique en position 2 ;
(3) la teneur en graisse solide à 20 °C va de 20 à 30 % ;
(4) la teneur en graisse solide à 30 °C va de 0 à 10 %.

3. Composition d'huile et de graisse selon la revendication 1 ou 2, dans laquelle la composition d'huile et de graisse comprend 50 à 80 % de graisse solide à 10 °C ; de préférence, la composition d'huile et de graisse comprend 60 à 80 % de graisse solide à 10 °C ; plus préférablement, la composition d'huile et de graisse comprend 65 à 80 % de graisse solide à 10 °C.

4. Composition d'huile et de graisse selon la revendication 1, 2 ou 3, dans laquelle la composition d'huile et de graisse comprend moins de 25 % de graisse solide à 25 °C ; de préférence, la composition d'huile et de graisse comprend moins de 20 % de graisse solide à 25 °C ; plus préférablement, la composition d'huile et de graisse comprend moins de 15 % de graisse solide à 25 °C ; plus préférablement, la composition d'huile et de graisse comprend moins de 10 % de graisse solide à 25 °C ; plus préférablement, la composition d'huile et de graisse comprend 5 à 10 % de graisse solide à 25 °C.

5. Composition d'huile et de graisse selon la revendication 1, dans laquelle :
en fonction de la quantité totale de la composition d'huile et de graisse, la composition d'huile et de graisse comprend 60 % de fraction d'huile de palme, 20 % d'huile de coco et 20 % de fraction d'huile de palmiste ; ou
en fonction de la quantité totale de la composition d'huile et de graisse, la composition d'huile et de graisse comprend 70 % de fraction d'huile de palme, 10 % d'huile de coco et 20 % de fraction d'huile de palmiste ; ou
en fonction de la quantité totale de la composition d'huile et de graisse, la composition d'huile et de graisse comprend 50 % de fraction d'huile de palme, 20 % d'huile de coco et 30 % de fraction d'huile de palmiste.

6. Bouillie de chocolat comprenant la composition d'huile et de graisse selon l'une quelconque des revendications 1 à 5, dans laquelle en fonction de la masse totale de la bouillie de chocolat, la quantité de la composition d'huile et de graisse va de 20 à 40 % ou de 20 à 35 %.

7. Bouillie de chocolat selon la revendication 6, dans laquelle la bouillie de chocolat comprend 20 à 35 % de la composition d'huile et de graisse selon la présente description, 35 à 50 % de sucre, 5 à 15 % de poudre de cacao, 0,1 à 0,5 % de lécithine ; de préférence, le sucre est un ou plusieurs parmi saccharose, lactose, maltose, sucre blanc en grains, caramel, fructose et tréhalose.

8. Bouillie de chocolat selon la revendication 6 ou 7, dans laquelle :
la bouillie de chocolat comprend en outre du lait en poudre ; de préférence, le lait en poudre est du lait écrémé en poudre et/ou du lait entier en poudre ; et/ou
la bouillie de chocolat comprend en outre du yaourt en poudre et/ou du lactosérum en poudre.

9. Chocolat cuit comprenant la bouillie selon l'une quelconque des revendications 6 à 8 ou la composition d'huile et de graisse selon l'une quelconque des revendications 1 à 5 ; en fonction de la masse du chocolat cuit, la quantité de la composition d'huile et de graisse va de 20 à 40 % ou de 20 à 35 % ;
de préférence, le chocolat cuit est du chocolat cuit aromatisé au lait, du chocolat cuit aromatisé au yaourt, du chocolat aromatisé à la fraise, du chocolat aromatisé à la mangue, du chocolat croustillant au germe de lait de riz cuit ou des chocolats cuits aromatisés au fromage.

10. Chocolat cuit selon la revendication 9, dans lequel le chocolat cuit comprend en outre un ou plusieurs parmi sucre, lécithine, lait en poudre, yaourt en poudre et lactosérum en poudre ; ou le chocolat cuit est un produit de chocolat additionné d'un ou plusieurs parmi fruits à coques cuits, fruits à coques cuisinés, produits cuits, fruits séchés et produits et matières premières de céréales mûres ; de préférence, les fruits à coques cuits ou les fruits à coques cuisinés sont choisis parmi un ou plusieurs parmi noisette hachée, cacahouète hachée, amandes effilées, amandes hachées et graines de melon ; le produit cuit est choisi parmi un ou plusieurs parmi miettes d'Oreo, miettes de biscuits, croustillants au caramel et miettes de nem ; le fruit séché est choisi parmi un ou plusieurs parmi fraises séchées, canneberges séchées, myrtilles séchées et mangue séchées ; et les produits et matières premières de céréales mûres sont choisis parmi un ou plusieurs parmi flocons de riz, gruau d'avoine, sésame, amidon et maltodextrine.

11. Procédé permettant de préparer un chocolat cuit selon la revendication 9, qui comprend les étapes consistant à :
(1) préparer des matières premières comportant la composition d'huile et de graisse selon l'une quelconque des revendications 1 à 5 ;
(2) mélanger les matières premières uniformément, les placer dans un broyeur à boulets, et les moudre à une finesse de 20 à 30 µm pour obtenir une bouillie de chocolat ;
(3) isoler la bouillie de chocolat, puis la couler dans un moule pour fabriquer un matériau de départ de chocolat ;
(4) placer le matériau de départ de chocolat dans un équipement de cuisson à 200 à 400 °C, de préférence 200 à 300 °C, plus préférablement 220 à 260 °C, et cuire pendant 80 à 300 secondes, tel que 80 à 150 secondes, pour préparer le chocolat cuit.

12. Aliment cuit enrobé de chocolat comprenant la composition d'huile et de graisse selon l'une quelconque des revendications 1 à 5, dans lequel, en fonction de la masse totale de l'aliment cuit, la quantité de la composition d'huile et de graisse va de 5 % à 25 % ; de préférence, l'aliment cuit est du chocolat croustillant au germe de lait de riz cuit.

13. Procédé permettant de préparer un aliment cuit à enrobage croustillant de chocolat cuit tel que défini dans la revendication 12, qui comprend les étapes consistant à :
(1) préparer des matières premières comportant la composition d'huile et de graisse selon l'une quelconque des revendications 1 à 5 ;
(2) mélanger les matières premières uniformément, les placer dans un broyeur à boulets, et les moudre à une finesse de 20 à 30 µm pour obtenir une bouillie de chocolat ;
(3) isoler la bouillie de chocolat pour enrobage de produit cuit et enrobage d'une galette ;
(4) placer l'enrobage de galette dans un équipement de cuisson à 200 à 400 °C, de préférence 200 à 300 °C, plus préférablement 220 à 260 °C et cuire pendant 80 à 300 secondes, tel que 80 à 150 secondes, pour obtenir un aliment cuit à enrobage croustillant de chocolat cuit, de préférence, le procédé comprend en outre l'aspersion de germe de blé sur l'enrobage de galette.

14. Chocolat cuit fourré comprenant la composition d'huile et de graisse selon l'une quelconque des revendications 1 à 5, dans lequel, en fonction de la masse totale du chocolat fourré, la teneur de la composition d'huile et de graisse va de 5 % en poids à 20 % en poids.

15. Procédé permettant de préparer un chocolat cuit fourré selon la revendication 14, qui comprend les étapes consistant à :
(1) préparer les matières premières comportant la composition d'huile et de graisse selon l'une quelconque des revendications 1 à 5 ;
(2) mélanger les matières premières uniformément, les placer dans un broyeur à boulets, et les moudre à une finesse de 20 à 30 µm pour obtenir une bouillie de coque en chocolat ;
(3) choisir une huile et une graisse de chocolat molles appropriées pour un fourrage, et les moudre pour préparer le coulis de chocolat pour fourrage ;
(4) à l'aide de la bouillie de chocolat cuit en guise de matériau de coque et de coulis de chocolat mou pour fourrage en guise de fourrage, déverser dans le chocolat fourré à la main ou à l'aide d'une machine de moulage de chocolat, refroidir et solidifier, et démouler ;
(5) placer le chocolat fourré dans un équipement de cuisson à 200 à 400 °C, de préférence 200 à 300 °C, plus préférablement 220 à 260 °C, et cuire pendant 80 à 300 secondes, tel que 80 à 150 secondes, pour préparer le chocolat cuit fourré.
